# EUROPÄISCHE PATENTSCHRIFT

(11) **EP 2 155 826 B1**
(45) Veröffentlichungstag und Bekanntmachung des Hinweises auf die Patenterteilung: **31.05.2017**
(21) Anmeldenummer: 08736336.2
(22) Anmeldetag: 17.04.2008
(51) Int. Cl.: C09D 4/00, C08J 3/24, B29C 45/16

(54) **REAKTIVGEMISCH ZUR BESCHICHTUNG VON FORMKÖRPERN MITTELS REAKTIONSSPRITZGUSS SOWIE BESCHICHTETER FORMKÖRPER**
REACTIVE MIXTURE FOR COATING MOLDED OBJECTS BY MEANS OF REACTION INJECTION MOLDING AND COATED MOLDED OBJECT
MÉLANGE RÉACTIF POUR LE REVÊTEMENT DE CORPS MOULÉS PAR MOULAGE PAR INJECTION-RÉACTION ET CORPS MOULÉS REVÊTUS

(30) Priorität: 19.06.2007 DE 102007028601
(43) Veröffentlichungstag der Anmeldung: 24.02.2010
(73) Patentinhaber: Evonik Röhm GmbH, 64293 Darmstadt (DE)
(72) Erfinder: SCHULTES, Klaus, 65193 Wiesbaden (DE); GOLDACKER, Thorsten, 64380 Rossdorf (DE); KORALEWSKI, Klaus, 64560 Riedstadt (DE); HÖSS, Werner, Shanghai 200237 (CN); SEYOUM, Ghirmay, 63329 Egelsbach (DE); GROSS, Elevtherios, 60385 Frankfurt am Main (DE); FELGER, Erwin, 64372 Ober-Ramstadt (DE)
(86) Internationale Anmeldenummer: PCT/EP2008/054678
(87) Internationale Veröffentlichungsnummer: WO 2008/155149

(56) Entgegenhaltungen:
- EP-A- 0 618 244
- WO-A-01/53420
- WO-A-02/10292
- WO-A-2005/010106
- WO-A2-2004/048076
- DE-A1- 19 924 674
- US-A- 3 935 330
- US-A- 4 800 123
- US-A- 5 906 788
- US-A1- 2003 078 316
- US-A1- 2003 096 928
- JOSÉ ULISSSES JANSEN ET AL: "A new resin for photocurable insulating varnishes", NUCLEAR INSTRUMENTS AND METHODS IN PHYSICS RESEARCH B, no. 236, 17 May 2005 (2005-05-17), - 17 May 2005 (2005-05-17), pages 546-551, Amsterdam

## Beschreibung

Die vorliegende Erfindung betrifft ein Verfahrenzur Beschichtung von Formkörpern mittels Reaktionsspritzguss. Des Weiteren betrifft die vorliegende Erfindung einen beschichteten Formkörper.

Thermoplastische Kunststoff-Formmassen, die beispielsweise auf Polymethylmethacrylat (PMMA) basieren können, werden für verschiedenste Anwendungen eingesetzt. Hierzu werden die Massen zu Formteilen extrudiert oder spritzgegossen.

Die Formteile werden heutzutage vielfach zur Herstellung von stark beanspruchten Teilen eingesetzt, wie beispielsweise verschiebbare Teile (Automobil im Innen- und Außenbereich, Abdeckungen von elektronischen Geräten wie Handy-, Computer-, Organizer, MP3 - Player- oder Fernseherabdeckungen), gedeckt eingefärbte Anbauteile (z.B. in der Automobilindustrie: Außenspiegel, Säulenverkleidungen, Spiegeldreiecke) oder gedeckt eingefärbte Gebrauchsgegenstände. Die Oberfläche der so eingesetzten Formteile neigt aufgrund der hohen Beanspruchung zur Ausbildung von Kratzern, die optisch vielfach nicht akzeptabel sind. Hierbei sind Formkörper, die über Spritzguss hergestellt wurden, besonders kratzempfindlich. Auch kann die Farbe der hergestellten Formkörper aufgrund ökonomischer Aspekte nur sehr schwer variiert werden, um so beispielsweise bei der Herstellung eine einfache Farbanpassung der Anbauteil an das jeweilige Automobil zu ermöglichen.

Zur Verbesserung der Kratzfestigkeit sowie zur Farbanpassung können die zuvor dargelegten Formkörper mit Lackschichten versehen werden. Allerdings ist das klassische Aufbringen von Reaktivlacken relativ aufwendig und somit teuer. Zur Herstellung von Massenartikeln sind diese Verfahren kaum geeignet.

Aus diesem Grund wurden bereits Verfahren entwickelt, durch die eine Kratzfestschicht relativ kostengünstig mittels Spritzgussverfahren auf die Formkörper aufgebracht werden kann. Beispielsweise beschreiben die Druckschriften JP 11300776 und JP 2005074896 Spritzgussverfahren, bei welchen ein Formkörper mit einer Kratzfestschicht erhalten wird.

Die Druckschrift JP 11300776 (Dainippon Toryo, 1998) beschreibt einen zweistufigen RIM-Prozess. Zuerst wird durch Metathese-RIM von Dicyclopentadien ein Formkörper erhalten. Nach dem Aushärten wird der bewegliche Teil des RIM-Werkzeugs zurück gefahren, so dass ein definierter Spalt zwischen Formkörper und Form entsteht. In diesen Spalt wird in einem zweiten RIM-Prozess ein Coating-Material eingespritzt, das aus acrylfunktionalisierten Urethanoligomeren, Styrol, Diacrylatvernetzern sowie ggf. Füllstoffen und Pigmenten (TiO₂, Talkum) besteht und bei 95°C für 2min radikalisch ausgehärtet wird.

Das Dokument JP 2005074896 (Toyota Motor Corp.; Dainippon Toryo Co.) beschreibt ebenfalls einen RIM-Prozess. In einem ersten konventionellen Spritzgussschritt wird ein Kunststoff, insbesondere Polycarbonat (PC) zu einem flächigen Formteil verarbeitet. Das Werkzeug öffnet sich anschließend um einen geringen Spalt und binnen weniger Sekunden wird eine Reaktivlösung aus acrylatfunktionalisierten Urethanoligomeren, Acrylatvernetzern, Inhibitoren und einem organischen Peroxidinitiator eingespritzt und ausgehärtet. Bei 95°C ist die Aushärtung nach wenigen Sekunden vollständig und nach 90s wird der Verbundkörper entformt. Er weist eine gute Kratzfestigkeit, Verbundhaftung, Temperaturwechsel- und Warmwasserwechselbeständigkeit auf. Zwingend in allen Ansprüchen ist die Anwesenheit eines Urethanoligomers, das aus Isophorondiisocyanat- oder Bis(isocyanocyclohexyl)methan-Bausteinen aufgebaut ist.

WO 02/10292 A1 offenbart ein Reaktivgemisch, welches Ditrimethylolpropantetraacetat, eine Suspension von Kolloid-Silica in Tripropylenglycoldiacrylat, einen Photoinitiator sowie einen thermischen Initiator umfasst. Das erfindungsgemäße Verfahren offenbart WO 02/10292 A1 nicht.

US 4,800,123 A beschreibt unter anderem eine in-mold-Beschichtungszusammensetzung, die aus 80 Gew.-Teilen Dipentaerythritolhexaacrylat, 20 Teilen N-Vinyl-2-pyrrolidon, 4 Teilen Irgacure 651 und 1 Teil Lupersol 256 besteht.

US 5,906,788 A offenbart eine abriebfeste Beschichtungszusammensetzung, die aus 60 g Dipentaerythritolmonohydroxypentaacrylat, 0,2 g Nuocure CK, 0,3 g Methylethylketoxim, 15 g 98,0% 2-Hydroxyethylmethacrylat, 7,4 g Celluloseacetatbutyrat (CAB 551,01), 1,5 g 2,5-dihydroxyperoxy-2,5-dimethylhexan und 10 g Polyallylglycidylether besteht.

DE 199,24,674 A1 beschreibt einen thermisch und mit aktinischer Strahlung härtbaren Beschichtungsstoff, enthaltend
1. mindestens einen Bestandteil mit 1. mindestens zwei funktionellen Gruppen, welche der Vernetzung mit aktinischer Strahlung dienen, und
2. mindestens eine funktionellen Gruppe, welche mit den Hydroxyl- und/oder Thiolgruppen im Bestandteil thermische Vernetzungsreaktionen eingehen kann, und
3. mindestens ein verzweigtes, cyclisches und/oder acyclisches C9-C16-Alkan,das mit mindestens zwei Hydroxyl- oder Thiolgruppen oder mindestens einer Hydroxyl- und mindestens einer Thiolgruppe funktionalisiert ist. Bei den beiden funktionellen Gruppen (1) kann es sich um olefinisch ungesättigte Gruppen und/oder Epoxidgruppen, insbesondere olefinisch ungesättigte Gruppen handeln, und bei den funktionellen Gruppen (2) kann es sich um Isocyanatgruppen handeln.

Jose Ulisses Jansen et al. (Nuclear Instruments and Methods in Physics Research B, 236 (2005), 546-551) beschreiben ein Polyesterharz, das in 1,6 Hexanedioldiacrylate gelöst und mit 2-Hydroxy-2-methyl-1-phenyl-propan-1-on versetzt und anschließend gehärtet wird.

WO 2004/048076 A2 beschreibt ein Verfahren zur Steuerung eines Spritzgießsystems bei dem
1) ein Formsystem breitgestellt wird, das ein Betriebssystem (A) und eine Formmaschine (B) umfasst, die eine Form umfasst, welche
   (i) erste und zweite Formabschnitte umfasst und
   (ii) mindestens einer der Formabschnitte, zumindest eine Düse umfasst, durch die ein substratbildendes Material eingespritzt wird, und
2) eine Dispergiervorrichtung, die eine Beschichtungszusammensetzung beinhalten und einspritzen kann.

Die zuvor dargelegten Formkörper weisen bereits gute Eigenschaften auf. Allerdings besteht ein dauerhaftes Bestreben die Kratzfestigkeit der so erhaltenen Formkörper zu verbessern. Weiterhin ist die Herstellung zeitintensiv, so dass das Verfahren insgesamt teuer ist. Darüber hinaus ist die Witterungsstabilität der Formkörper verbesserungsbedürftig. Eine vorzeitige Polymerisation des Reaktivgemischs in der Spritzgussvorrichtung stellt ein weiteres Problem des in den Druckschriften JP 11300776 und JP 2005074896 beschriebenen Spritzgussverfahrens dar, so dass kurze Taktzeiten durch diese Verfahren in einer Massenproduktion kaum zu erzielen sind.

In Anbetracht des Standes der Technik offenbart die vorliegenden Beschreibung ein Reaktivgemisch zur Beschichtung von Formkörpern mittels Reaktionsspritzguss, das zu einer Beschichtung mit einer besonders hohen Kratzfestigkeit und hohen Haftfestigkeit auf einem Formkörper führt.

Dieses Reaktivgemisch kann besonders einfach und in kurzer Zeit vollständig gehärtet werden.

Die Aufgabe der vorliegenden Erfindung war, Verfahren zur Herstellung von beschichteten Formkörpern zur Verfügung zu stellen, die einfach und kostengünstig durchgeführt werden können. Hierbei sollte der Formkörper mit möglichst kurzen Taktzeiten und, insgesamt gesehen, unter geringem Energieverbrauch erhalten werden.

Weiterhin war die Schaffung von Formkörpern mit hervorragenden mechanischen Eigenschaften Aufgabe der vorliegenden Erfindung. Insbesondere sollten die Formkörper eine hohe Kratzfestigkeit und Härte zeigen. Darüber hinaus sollten die beschichteten Formkörper eine hohe Witterungs- und Chemikalienbeständigkeit aufweisen.

Gelöst werden diese sowie weitere nicht explizit genannte Aufgaben, die jedoch aus den hierin einleitend diskutierten Zusammenhängen ohne Weiteres ableitbar oder erschließbar sind, durch ein Verfahren mit allen Merkmalen des Patentanspruchs 1. Zweckmäßige Abwandlungen des erfindungsgemäßen Verfahrens werden in den auf Anspruch 1 rückbezogenen abhängigen Ansprüchen unter Schutz gestellt. Im Hinblick auf das Verfahren und den Formkörper stellen die Ansprüche Lösungen der zugrunde liegenden Aufgabe zur Verfügung.

Gegenstand der vorliegenden Erfindung ist dementsprechend ein Verfahren zur Beschichtung von Formkörpern mittels Reaktionsspritzguss umfassend mindestens 40 Gew.-% an (Meth)acrylaten mit mindestens zwei Doppelbindungen, welches dadurch gekennzeichnet ist, dass das Reaktivgemisch mindestens einen Fotoinitiator und mindestens einen thermischen Initiator umfasst, dadurch gekennzeichnet, dass man eine Formmasse in eine Spritzgussform spritzt und unter Erhalt eines Formkörpers abkühlt, die Spritzgussform so verändert, dass ein Zwischenraum zwischen zu beschichtender Oberfläche des Formkörpers und der Innenoberfläche der Spritzgussform entsteht, den entstandenen Zwischenraum durch Spritzguss mit einem Reaktivgemisch füllt, und das Reaktivgemisch zunächst thermisch und nach der thermischen Härtung durch Bestrahlung härtet.

Hierdurch gelingt es auf nicht vorhersehbare Weise einen beschichteten Formkörper zur Verfügung zu stellen, der eine hervorragende Kratzfestigkeit aufweist und sehr kostengünstig erhalten werden kann. Überraschend zeigt die Beschichtung eine sehr hohe Haftfestigkeit auf dem Formkörper. Darüber hinaus zeigen die mit dem erfindungsgemäßen Verfahren erhaltenen Beschichtungen eine hohe Witterungsstabilität. Weiterhin weisen die beschichteten Formkörper gute mechanische Eigenschaften auf, wobei diese sowohl eine besonders hohe Härte als auch eine gute Schlagzähigkeit zeigen können.

Des Weiteren ermöglicht das erfindungsgemäße Verfahren die Herstellung einer chemikalienbeständigen und temperaturbeständigen Beschichtung auf einem Formkörper.

Darüber hinaus kann das eingesetzte Reaktivgemisch Additive aufweisen, um die gewünschten Eigenschaften auf spezifische Anforderungen anzupassen. So kann eine Farbanpassung des Formkörpers auf einfache Weise erfolgen.

Weiterhin kann das erfindungsgemäße Verfahren einfach und kostengünstig durchgeführt werden, wobei der Formkörper mit überraschend kurzen Taktzeiten und, insgesamt gesehen, unter geringem Energieverbrauch erhalten werden kann.

Das erfindungsgemäß verwendete Reaktivgemisch weist mindestens 40 Gew.-%, vorzugsweise mindestens 60 Gew.-% und besonders bevorzugt mindestens 90 Gew.-% an (Meth)acrylaten mit mindestens zwei Doppelbindungen, bezogen auf das Gesamtgewicht des Reaktivgemischs, auf. Der Begriff "Doppelbindung" bezeichnet insbesondere Kohlenstoff-Kohlenstoff-Doppelbindungen, die radikalisch polymerisierbar sind. Der Ausdruck "(Meth)acrylat" steht für Acrylat, Methacrylat sowie Mischungen aus beiden. (Meth)acrylaten mit mindestens zwei Doppelbindungen sind auch als vernetzende Monomere bekannt. Zu diesen gehören insbesondere (Meth)acrylate mit zwei Doppelbindungen, wie beispielsweise (Meth)acrylate, die sich von ungesättigten Alkoholen ableiten, wie z. B. 2-Propinyl(meth)acrylat, Allyl(meth)acrylat, Vinyl(meth)acrylat, sowie (Meth)acrylate, die sich von Diolen oder höherwertigen Alkoholen ableiten, wie z.B. Glycoldi(meth)acrylate, wie Ethylenglycoldi(meth)acrylat, Diethylenglycoldi(meth)acrylat, Triethylenglycoldi(meth)acrylat, Tetra- und Polyethylenglycoldi(meth)acrylat, 1,3- Butandiol(meth)acrylat, 1,4-Butandiol(meth)acrylat, 1,6-Hexandioldi(meth)acrylat, Glycerindi(meth)acrylat und Diurethandimethacrylat; (Meth)acrylate mit drei oder mehr Doppelbindungen, wie z.B. Glycerintri(meth)acrylat, Trimethylolpropantri(meth)acrylat, Pentaerythrittetra(meth)acrylat und Dipentaerythritpenta(meth)acrylat.

Besonders bevorzugte (Meth)acrylaten mit mindestens zwei Doppelbindungen sind insbesondere 1,6-Hexandioldiacrylat, Trimethylolpropantriacrylat, Pentaerythrittetraacrylat und Dipentaerythritpentaacrylat.

Gemäß einer besonderen Abwandlung kann das Reaktivgemisch mindestens ein (Meth)acrylat mit drei oder mehr Doppelbindungen umfassen. Vorzugsweise beträgt der Anteil an (Meth)acrylaten mit drei oder mehr Doppelbindungen mindestens 10 Gew.-%, besonders bevorzugt mindestens 25 Gew.-%, insbesondere bevorzugt mindestens 50 Gew.-% und ganz besonders bevorzugt mindestens 90 Gew.-%, bezogen auf das Gewicht des Reaktivgemischs.

Von besonderem Interesse sind des Weiteren Reaktivgemische, die höchstens 90 Gew.-%, besonders bevorzugt höchstens 75 Gew.-%, insbesondere bevorzugt höchstens 50 Gew-% und ganz besonders bevorzugt höchstens 7 Gew.-% an Monomeren mit zwei oder weniger Doppelbindungen umfassen.

Gemäß einer besonderen Ausführungsform umfasst das Reaktivgemisch vorzugsweise 1,6-Hexandioldiacrylat, Trimethylolpropantriacrylat und/oder Pentaerythrittetraacrylat. Von besonderem Interesse sind insbesondere Reaktivgemische, die Trimethylolpropantriacrylat und Pentaerythrittetraacrylat umfassen, wobei das Gewichtsverhältnis von Trimethylolpropantriacrylat zu Pentaerythrittetraacrylat vorzugsweise im Bereich von 10:1 bis 1:10, bevorzugt im Bereich von 5:1 bis 1:5, insbesondere bevorzugt im Bereich von 3:1 bis 1:3 und ganz besonders bevorzugt im Bereich von 2:1 bis 1:2 liegen kann.

Gemäß einer weiteren Ausgestaltung umfasst das Reaktivgemisch vorzugsweise Trimethylolpropantriacrylat und 1,6-Hexandioldiacrylat, wobei das Gewichtsverhältnis von Trimethylolpropantriacrylat zu 1,6-Hexandioldiacrylat vorzugsweise im Bereich von 10:1 bis 1:10, bevorzugt im Bereich von 5:1 bis 1:5, insbesondere bevorzugt im Bereich von 3:1 bis 1:3 und ganz besonders bevorzugt im Bereich von 2:1 bis 1:2 liegen kann.

Von besonderem Interesse sind weiterhin Reaktivgemische, die vorzugsweise Pentaerythrittetraacrylat und 1,6-Hexandioldiacrylat umfassen. Zweckmäßig kann das Gewichtsverhältnis von Pentaerythrittetraacrylat zu 1,6-Hexandioldiacrylat im Bereich von 10:1 bis 1:10, bevorzugt im Bereich von 5:1 bis 1:5, insbesondere bevorzugt im Bereich von 3:1 bis 1:3 und ganz besonders bevorzugt im Bereich von 2:1 bis 1:2 liegen.

Reaktivgemische, die Pentaerythrittetraacrylat und/oder Trimethylolpropantriacrylat umfassen, zeigen überraschend eine besonders hohe Kratzfestigkeit, die insbesondere mit dem Anteil an Pentaerythrittetraacrylat zunimmt. Reaktivgemische, die 1,6-Hexandioldiacrylat und/oder Trimethylolpropantriacrylat umfassen, zeigen eine besonders hohe UV-Stabilität, die insbesondere durch den Xenontest bestimmt werden kann. So behalten Mischungen mit einem hohen Anteil an 1,6-Hexandioldiacrylat auch nach einer Xenonbestrahlung eine hohe Kratzfestigkeit gemäß dem Reibradtest bei.

Die Kratzfestigkeit der Beschichtung ist unter anderem abhängig von der Anzahl an polymerisierbaren Doppelbindungen, bezogen auf das Gewicht des Gemischs. Je höher dieser Anteil, desto höher die Kratzfestigkeit, die die Beschichtung erzielen kann. Vorzugsweise kann das Reaktivgemisch dementsprechend mindestens 1 Mol an Doppelbindung pro 120 g Reaktivgemisch, besonders bevorzugt mindestens 1 Mol an Doppelbindung pro 105 g Reaktivgemisch aufweisen. Hierbei kann die Kratzfestigkeit insbesondere durch die Verwendung von (Meth)acrylaten mit drei oder mehr Doppelbindungen gesteigert werden.

Das Reaktivgemisch kann insbesondere in Reaktivspritzgussverfahren eingesetzt werden. Dementsprechend weist das Gemisch eine Viskosität auf, die einen derartigen Einsatz ermöglicht. Vorzugsweise liegt die dynamische Viskosität des Reaktivgemischs im Bereich von 1 bis 200 mPa*s bei 25°C, besonders bevorzugt im Bereich von 5 bis 50 mPa*s bei 25°C, wobei die dynamische Viskosität gemäß Brookfield (mit UL-Adapter). bestimmt werden kann.

Zur Härtung umfasst das Reaktivgemisch mindestens einen Initiator, durch den die Monomere radikalisch polymerisiert werden können. Hierbei können thermische Initiatoren eingesetzt werden, die durch Wärmeeinwirkung Radikale bilden, oder Fotoinitiatoren, die bei Bestrahlung mit elektromagnetischen Wellen eine radikalische Polymerisation auslösen. Überraschend können durch die Verwendung von Reaktivgemischen, die sowohl thermische Initiatoren als auch Fotoinitiatoren umfassen, besondere Vorteile erzielt werden. Zu diesen Vorteilen zählen insbesondere kurze Taktzeiten bei der Herstellung der beschichteten Formkörper sowie eine besonders hohe Witterungsstabilität, Kratzfestigkeit und Haftfestigkeit der Beschichtung.

Geeignete thermische Initiatoren sind unter anderem Azoverbindungen, Peroxyverbindungen, Persulfatverbindungen oder Azoamidine. Nicht limitierende Beispiele sind Dibenzoylperoxid, Dicumolperoxid, Cumolhydroperoxid, Diisopropylperoxidicarbonat, Bis(4-t-butylcyclohexyl)peroxidicarbonat, Dikaliumpersulfat, Ammoniumperoxidisulfat, 2,2'-Azobis(2-methylpropionitril) (AIBN), 2,2'-Azobis-(isobuttersäureamidin)hydrochlorid, Benzpinakol, Dibenzylderivate, Methylethylenketonperoxid, 1,1-Azobiscyclohexancarbonitril, Methylethylketonperoxid, Acetylacetonperoxid, Dilaurylperoxid, Didecanoylperoxid, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexa-noat, tert.-Butylperoxy-3,5,5-trimethylhexanoat, tert.-Butylperoxyisobutyrat, tert.-Butylperoxyacetat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, sowie die von der Firma DuPont unter dem Namen ®Vazo, beispielsweise ®Vazo V50 und ®Vazo WS erhältlichen Radikalbildner.

Zweckmäßig kann das Reaktivgemisch 0,01 Gew.-% bis 3 Gew.-%, vorzugsweise 0,1 Gew.-% bis 2,5 Gew.-% und besonders bevorzugt 0,5 Gew.-% bis 1,5 Gew.-% thermischen Initiator, bezogen auf das Gewicht des Reaktivgemischs, umfassen.

Zu den bevorzugten Fotoinitiatoren gehören unter anderem α□α-Diethoxyacetophenon (DEAP, Upjon Corp), n-Butylbenzoinether (®Trigonal-14, AKZO) und 2,2-Dimethoxy-2-phenylacetophenon (®Igacure 651) und 1-Benzoylcyclohexanol (®Irgacure 184), Bis(2,4,6-trimethylbenzoyl)-phenylphosphinoxid (®Irgacure 819) und 1-[4-(2-Hydroxyethoxy)phenyl]-2-hydroxy-2-phenylpropan-1-on (®Irgacure 2959), die jeweils von der Fa. Ciba Geigy Corp. kommerziell erhältlich sind.

Der Anteil an Fotoinitiator ist an sich nicht kritisch. Vorzugsweise weist das Reaktivgemisch 0,01 Gew.-% bis 10 Gew.-%, besonders bevorzugt 0,3 Gew.-% bis 5 Gew.-% und ganz besonders bevorzugt 0,7 Gew.-% bis 2,3 Gew.-% Fotoinitiator, bezogen auf das Gewicht des Reaktivgemischs, auf.

Gemäß einer bevorzugten Abwandlung kann das Gewichtsverhältnis von Fotoinitiator zu thermischen Initiator im Bereich von 20:1 bis 1:5, bevorzugt im Bereich 15:1 bis 1:1 und besonders bevorzugt im Bereich 10:1 bis 2:1 liegen.

Neben den zuvor genannten Bestandteilen kann das Reaktivgemisch ein Gleitmittel umfassen. Hierdurch gelingt es überraschend die Entformbarkeit des beschichteten Formkörpers zu verbessern, ohne dass die Haftfestigkeit auf kritische Werte herabgesetzt werden würde. Als Hilfsstoffe können demnach Gleitmittel, z. B. ausgewählt aus der Gruppe der Polysiloxane, der gesättigten Fettsäuren mit weniger als C₂₀, bevorzugt C₁₆ bis C₁₈ Kohlenstoffatomen oder der gesättigten Fettalkohole mit weniger als C₂₀, bevorzugt C₁₆ bis C₁₈ Kohlenstoffatomen enthalten sein. Bevorzugt sind geringe Mengenanteile von höchstens 0,25, z. B. 0,05 bis 0,2 Gew.-%, bezogen auf das Gewicht des Reaktivgemischs enthalten. Geeignet sind z. B. Stearinsäure, Palmitinsäure, technische Gemische aus Stearin- und Palmitinsäure. Zweckmäßig sind darüber hinaus Polysiloxane, die acryliert sind, wie zum Beispiel 13/6/αω2-Hexylacrylsiloxan, wobei diese Verbindung beispielsweise unter der Handelsbezeichnung RC 725 von der Fa. Goldschmidt GmbH erhalten werden kann. Polysiloxane können auch in höheren Mengen eingesetzt werden. Zweckmäßig sind beispielsweise Anteile von höchstens 10 Gew.-%, bevorzugt von höchstens 1 Gew.-% und ganz besonders bevorzugt von höchstens 0,5 Gew.-%. Weiterhin geeignet sind z. B. n-Hexadecanol, n-Octadecanol, sowie technische Gemische aus n-Hexadecanol und n-Octadecanol. Ein besonders bevorzugtes Gleit- bzw. Formtrennmittel ist Stearylalkohol.

Weiterhin kann das Reaktivgemisch übliche Additive, wie Farbmittel, Pigmente, beispielsweise Metallic-Pigmente, UV-Stabilisatoren, Füllstoffe oder Nanomaterialien, insbesondere ITO-Nanopartikel umfassen. Der Anteil dieser Additive ist von der beabsichtigten Anwendung abhängig und kann daher in weiten Bereichen liegen. Vorzugsweise kann dieser Anteil, falls Additive enthalten sind, 0 bis 30 Gew.-%, besonders bevorzugt 0,1 bis 5 Gew.-% betragen.

Das durch die vorliegende Erfindung bereitgestellte Verfahren kann insbesondere zur Beschichtung von Formkörpern mittels Reaktionsspritzguss eingesetzt werden. Dementsprechend sind auch beschichtete Formkörper Gegenstand der vorliegenden Erfindung.

Spritzgussverfahren sind seit langem bekannt und werden weithin eingesetzt. Im Allgemeinen wird hierbei eine Formmasse in eine Spritzgussform gespritzt und unter Erhalt eines Formkörpers abgekühlt. Der so erhaltene Formkörper kann anschließend mit einer Beschichtung versehen werden.

Beispielsweise kann das so erhaltene Formteil fertig ausgekühlt und entformt werden. In einem zweiten, nach geschalteten separaten Spritzgießschritt wird dann z.B. dieser Vorspritzling in ein anderes Werkzeug mit einer ausgesparten Kavität eingelegt bzw. umgesetzt und das Reaktivgemisch in das Werkzeug eingespritzt und dabei auf den Vorspritzling aufgespritzt. Dieses Verfahren ist als Einlege- oder Umsetzverfahren bekannt. Für die nachfolgend erreichbare Haftung ist es besonders vorteilhaft, wenn das vorgespritzte Formteil vorgewärmt wird.

Gemäß einer bevorzugten Ausführungsform kann das Beschichten mit Vorteil insbesondere durch eine Veränderung der Spritzgussform erfolgen, wobei ein Zwischenraum zwischen zu beschichtender Oberfläche des Formkörpers und der Innenoberfläche der Spritzgussform entsteht. Der entstandene Zwischenraum kann durch Spritzguss mit einem Reaktivgemisch gefüllt werden. Das Reaktivgemisch kann bevorzugt zunächst thermisch und nach der thermischen Härtung durch Bestrahlung gehärtet werden.

Durch diese Verfahrensführung gelingt es insbesondere beschichtete Formkörper mit einer hohen Kratzfestigkeit zu erhalten, wobei die Beschichtung eine besonders gute Haftfestigkeit aufweist. Darüber hinaus können auch besonders kurze Taktzeiten erzielt werden.

Anlagen, die eine derartige Verfahrensführung ermöglichen, sind unter anderem in den zuvor beschriebenen Dokumenten JP 11300776 und JP 2005074896 dargelegt.

Formmassen zur Herstellung des zu beschichtenden Formkörpers sind an sich bekannt, wobei diese Formmassen als obligatorische Komponente thermoplastisch verarbeitbare Polymere enthalten. Zu den bevorzugten Polymeren gehören beispielsweise Poly(meth)acrylate, insbesondere Polymethylmethacrylat (PMMA), Poly(meth)acrylimide, Polyacrylnitrile, Polystyrole, Polyether, Polyester, Polycarbonate, Polyvinylchloride. Hierbei sind Poly(meth)acrylate und Poly(meth)acrylimide bevorzugt. Diese Polymere können einzeln sowie als Mischung eingesetzt werden. Des Weiteren können diese Polymere auch in Form von Copolymeren vorliegen. Bevorzugte Copolymere sind unter anderem Styrol-Acrylnitril-Copolymere, Styrol-Maleinsäure-Copolymere und Polymethylmethacrylat-Copolymere, insbesondere Polymethylmethacrylat-Poly(meth)acrylimid-Copolymere.

Besonders bevorzugte Formmassen weisen mindestens 15 Gew.-%, vorzugsweise mindestens 50 Gew.-% und besonders bevorzugt mindestens 80 Gew.-% Polymethylmethacrylat, Polymethacrylmethylimid und/oder Polymethylmethacrylat-Copolymere auf, bezogen auf das gesamte Gewicht der Formmasse.

Die Formmassen der vorliegenden Erfindung können bevorzugt Poly(meth)acrylate enthalten. Der Ausdruck (Meth)acrylate umfasst Methacrylate und Acrylate sowie Mischungen aus beiden.

Poly(meth)acrylate sind Polymere, die durch Polymerisation einer Monomerenmischung erhältlich sind, die mindestens 60 Gew.-%, bevorzugt mindestens 80 Gew.-% (Meth)acrylate aufweist, bezogen auf das Gewicht der Monomeren. Diese Monomere sind in der Fachwelt weithin bekannt und kommerziell erhältlich.

Zu diesen gehören unter anderem (Meth)acrylsäure und (Meth)acrylate, die sich von gesättigten Alkoholen ableiten, wie Methyl(meth)acrylat, Ethyl(meth)acrylat, Propyl(meth)acrylat, Butyl(meth)acrylat, Pentyl(meth)acrylat, Hexyl(meth)acrylat, 2-Ethylhexyl(meth)acrylat, Heptyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat usw.;
Amide und Nitrile der (Meth)acrylsäure, wie
N-(3-Dimethylaminopropyl)(meth)acrylamid,
N-(Diethylphosphono)(meth)acrylamid,
1-Methacryloylamido-2-methyl-2-propanol; Cycloalkyl(meth)acrylate, wie 3-Vinylcyclohexyl(meth)acrylat, Bornyl(meth)acrylat;
Hydroxylalkyl(meth)acrylate, wie
3-Hydroxypropyl(meth)acrylat,
3,4-Dihydroxybutyl(meth)acrylat,
2-Hydroxyethyl(meth)acrylat, 2-Hydroxypropyl(meth)acrylat;
Glycoldi(meth)acrylate, wie 1,4-Butandiol(meth)acrylat,
(Meth)acrylate von Etheralkoholen, wie
Tetrahydrofurfuryl(meth)acrylat, Vinyloxyethoxyethyl(meth)acrylat; und mehrwertige (Meth)acrylate, wie
Trimethyloylpropantri(meth)acrylat.

Neben den zuvor dargelegten (Meth)acrylaten können zur Herstellung der Poly(meth)acrylate auch weitere ungesättigte Monomere eingesetzt werden, die mit den zuvor genannten Methacrylaten copolymerisierbar sind. Im allgemeinen werden diese Verbindungen in einer Menge von 0 bis 40 Gew.-%, vorzugsweise 0 bis 20 Gew.-%, bezogen auf das Gewicht der Monomeren, eingesetzt, wobei die Comonomere einzeln oder als Mischung verwendet werden können.
Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1;
Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Maleinsäureanhydrid, Methylmaleinsäureanhydrid, Maleinimid, Methylmaleinimid; und
Diene, wie beispielsweise Divinylbenzol.

Bevorzugte Poly(meth)acrylate sind durch Polymerisation von Mischungen erhältlich, die mindestens 20 Gew.-%, insbesondere mindestens 60 Gew.-% und besonders bevorzugt mindestens 80 Gew.-%, jeweils bezogen auf das Gesamtgewicht der zu polymerisierenden Monomere, Methylmethacrylat aufweisen. Diese Polymere werden im Rahmen der vorliegenden Erfindung als Polymethylmethacrylate bezeichnet. Bevorzugte Formmassen können verschiedene Poly(meth)acrylate enthalten, die sich beispielsweise im Molekulargewicht oder in der Monomerzusammensetzung unterscheiden.

Die Herstellung der (Meth)acrylat-Homo- und/oder Copolymere aus den zuvor dargelegten Monomeren nach den verschiedenen Verfahren der radikalischen Polymerisation ist an sich bekannt. So können die Polymere in Substanz-, Lösungs-, Suspensions- oder Emulsionspolymerisation hergestellt werden. Die Substanzpolymerisation ist beispielhaft in Houben-Weyl, Band E20, Teil 2 (1987), S. 1145ff. beschrieben. Wertvolle Hinweise hinsichtlich der Lösungspolymerisation finden sich eben dort auf S. 1156ff. Erläuterungen zur Suspensionspolymerisationstechnik finden sich eben dort auf S. 1149ff., während die Emulsionspolymerisation eben dort auf S. 1150ff. ausgeführt und erläutert wird.

Des Weiteren können bevorzugte Formmassen Poly(meth)acrylimide umfassen. Poly(meth)acrylimide weisen wiederkehrende Einheiten auf, die durch Formel (I) darstellbar sind, 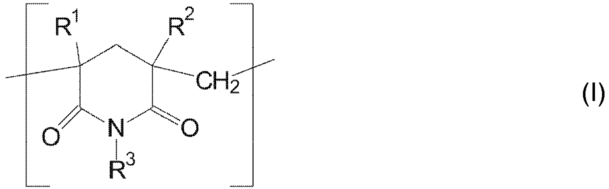 worin R¹ und R² gleich oder verschieden Wasserstoff oder eine Methylgruppe und R³ Wasserstoff oder ein Alkyl- oder Arylrest mit bis zu 20 Kohlenstoffatomen bedeuten.

Vorzugsweise bilden Einheiten der Struktur (I) mehr als 30 Gew.-%, besonders bevorzugt mehr als 50 Gew.-% und ganz besonders bevorzugt mehr als 80 Gew.-% des Poly(meth)acrylimids.

Die Herstellung von Poly(meth)acrylimiden ist an sich bekannt und beispielsweise in GB-PS 1 078 425, GB-PS 1 045 229, DE-PS 1 817 156 (= US-PS 3 627 711) oder DE-PS 27 26 259 (= US-PS 4 139 685) offenbart.

Darüber hinaus können diese Copolymerisate weitere Monomereeinheiten enthalten, die sich beispielsweise aus Estern der Acryl- oder Methacrylsäure, insbesondere mit niedrigen Alkoholen mit 1 - 4 C-Atomen, Styrol, Maleinsäure oder deren Anhydrid, Itakonsäure oder deren Anhydrid, Vinylpyrrolidon, Vinylchlorid oder Vinylidenchlorid ergeben. Der Anteil der Comonomeren, die sich nicht oder nur sehr schwer cyclisieren lassen, soll 30 Gew.-%, vorzugsweise 20 Gew.-% und besonders bevorzugt 10 Gew.-%, bezogen auf das Gewicht der Monomeren, nicht übersteigen.

Bevorzugt können Formmassen eingesetzt werden, die Poly(N-methylmethacrylimide) (PMMI) und/oder Polymethylmethacrylate (PMMA) umfassen. Poly(N-methylmethacrylimide) (PMMI), Polymethylmethacrylate (PMMA) und/oder PMMI-PMMA-Copolymere sind vorzugsweise Copolymere von PMMI und PMMA, welche durch teilweise Cycloimidisierung des PMMA hergestellt werden. (PMMI, welches durch Teilimidisierung von PMMA hergestellt wird, wird üblicherweise so hergestellt, dass maximal 83 % des eingesetzten PMMA imidisiert werden. Das dabei entstehende Produkt wird als PMMI bezeichnet, ist streng genommen aber ein PMMI-PMMA-Copolymer.) Sowohl PMMA als auch PMMI oder PMMI-PMMA-Copolymere sind kommerziell erhältlich, z. B. unter dem Markennamen Pleximid der Firma Röhm. Ein beispielhaftes Copolymer (Pleximid 8803) hat 33 % MMI-Einheiten, 54,4 % MMA-Einheiten, 2,6 % Methacrylsäureeinheiten und 1,2 % Anhydrideinheiten. Die Produkte sowie ihre Herstellung sind bekannt (Hans R. Kricheldorf, Handbook of Polymer Synthesis, Part A, Verlag Marcel Dekker Inc. New York - Basel - Hongkong, S. 223 f.; H. G. Elias, Makromoleküle, Hüthig und Wepf Verlag Basel - Heidelberg - New York; US-PSS 2 146 209, 4 246 374).

Darüber hinaus können die Formmassen Styrol-Acrylnitril-Polymere (SAN) umfassen. Besonders bevorzugte Styrol-Acrylnitril-Polymere können durch die Polymerisation von Mischungen erhalten werden, die aus
70 bis 92 Gew.-% Styrol
8 bis 30 Gew.-% Acrylnitril und
0 bis 22 Gew.-% weiterer Comonomere, jeweils bezogen auf das Gesamtgewicht der zu polymerisierenden Monomere, bestehen.

Zur Verbesserung der Schlagzähigkeitswerte können den Formmassen Siliconkautschuk-Pfropfcopolymerisate beigemischt werden, die zusammengesetzt sind aus
0,05 bis 95 Gew.-%, bezogen auf das Gesamtgewicht des Copolymerisats, eines Kerns a) aus einem siliciumorganischen Polymer, das der allgemeinen Formel (R₂SiO_{2/2})ₓ·(RSiO_{3/2})_{y}·(SiO_{4/2})_{z} mit x = 0 bis 99,5 Mol-%, y = 0,5 bis 100 Mol-%, z = 0 bis 50 Mol-% entspricht, wobei R gleiche oder verschiedene Alkyl- oder Alkenyl-Reste mit 1 bis 6 C-Atomen, Aryl-Reste oder substituierte Kohlenwasserstoffreste bedeutet,
0 bis 94,5 Gew.-%, bezogen auf das Gesamtgewicht des Copolymerisats, einer Polydialkylsiloxan-Schicht b) und
5 bis 95 Gew.-%, bezogen auf das Gesamtgewicht des Copolymerisats, einer Hülle c) aus organischen Polymeren, der Kern a) vor der Pfropfung Vinylgruppen umfasst und die Hülle c) durch radikalische Polymerisation einer Mischung, die Acrylsäureester und Methacrylate umfasst, erhältlich ist.

Die erfindungsgemäßen Formmassen können des weiteren Acrylatkautschuk-Modifier enthalten. Überraschend kann hierdurch ein hervorragendes Schlagzähigkeitsverhalten bei Raumtemperatur (ca. 23°C) der Formkörper erzielt werden, die aus den Formmassen hergestellt wurden. Besonders wesentlich ist, dass die mechanischen und thermischen Eigenschaften, wie beispielsweise das E-Modul oder die Vicat-Erweichungstemperatur, auf sehr hohem Niveau erhalten bleiben. Wird versucht ein ähnliches Kerbschlagzähigkeitsverhalten bei Raumtemperatur nur durch die Verwendung von Acrylatkautschuk-Modifier oder Siliconkautschuk-Pfropfcopolymerisat zu erzielen, so nehmen diese Werte deutlicher ab.

Derartige Acrylatkautschuk-Modifier sind an sich bekannt. Es handelt sich hierbei um Copolymerisate, die eine Kern-Hülle-Struktur aufweisen, wobei der Kern und die Hülle einen hohen Anteil an den zuvor beschriebenen (Meth)acrylaten aufweisen.

Bevorzugte Acrylatkautschuk-Modifier weisen hierbei eine Struktur mit zwei Schalen auf, die sich in ihrer Zusammensetzung unterscheiden.

Besonders bevorzugte Acrylatkautschuk-Modifier haben unter anderem folgenden Aufbau:
- Kern:: Polymerisat mit einem Methylmethacrylatanteil von mindestens 90 Gew.-%, bezogen auf das Gewicht des Kerns.
- Schale 1:: Polymerisat mit einem Butylacrylatanteil von mindestens 80 Gew.-%, bezogen auf das Gewicht der ersten Schale.
- Schale 2:: Polymerisat mit einem Methylmethacrylatanteil von mindestens 90 Gew.-%, bezogen auf das Gewicht der zweiten Schale.

Beispielsweise kann ein bevorzugter Acrylatkautschuk-Modifier folgenden Aufbau aufweisen:
- Kern:: Copolymerisat aus Methylmethacrylat (95,7 Gew.-%), Ethylacrylat (4 Gew.-%) und Allylmethacrylat (0,3 Gew.-%)
- S1:: Copolymerisat aus Butylacr∼dat (81,2 Gew.-%), Styrol (17,5 Gew.-%) und Allylmethacrylat (1,3 Gew.-%)
- S2:: Copolymerisat aus Methylmethacrylat (96 Gew.-%) und Ethylacrylat (4 Gew.-%)

Das Verhältnis von Kern zu Schale(n) der Acrylatkautschuk-Modifier kann in weiten Bereichen schwanken. Vorzugsweise liegt das Gewichtsverhältnis Kern zu Schale K/S im Bereich von 20:80 bis 80:20, bevorzugt von 30:70 zu 70:30 bis Modifiern mit einer Schale bzw. das Verhältnis von Kern zu Schale 1 zu Schale 2 K/S1/S2 im Bereich von 10:80:10 bis 40:20:40, besonders bevorzugt von 20:60:20 bis 30:40:30 bei Modifiern mit zwei Schalen.

Die Partikelgröße der Acrylatkautschuk-Modifier liegt üblich im Bereich von 50 bis 1000 nm, vorzugsweise 100 bis 500 nm und besonders bevorzugt von 150 bis 450 nm, ohne daß hierdurch eine Beschränkung erfolgen soll.

Gemäß einem besonderen Aspekt der vorliegenden Erfindung liegt das Gewichtsverhältnis von Siliconkautschuk-Pfropfcopolymerisat zu Acrylatkautschuk-Modifier im Bereich von 1:10 bis 10:1, vorzugsweise von 4:6 bis 6:4.

Besondere Formmassen bestehen aus
f1) 20 bis 95 Gew.-% Poly(meth)acrylate,
f2) 0 bis 45 Gew.-% Styrol-Acrylnitril-Polymere,
f3) 5 bis 60 Gew.-% Siliconkautschuk-Pfropfcopolymerisate
f4) 0 bis 60 Gew.-% auf Acrylatkautschuk basierende Schlagzähmodifier, jeweils bezogen auf das Gewicht der Komponenten f1 bis f4,
und üblichen Additiven und Zuschlagsstoffen.

Darüber hinaus können die zu polymerisierenden Zusammensetzungen, die erfindungsgemäßen Formmassen, bzw. die hieraus erhältlichen Formkörpern weitere weithin bekannte Additive enthalten. Zu diesen Additiven gehören unter anderem Molekulargewichtsregler, Trennmittel, Antistatika, Antioxidantien, Entformungsmittel, Flammschutzmittel, Schmiermittel, Farbstoffe, Fließverbesserungsmittel, Füllstoffe, Lichtstabilisatoren, Pigmente, Verwitterungsschutzmittel und Weichmacher.

Die Zusatzstoffe werden in üblicher Menge, d. h. bis zu 80 Gew.-%, vorzugsweise bis zu 30 Gew.-%, bezogen auf die Gesamtmasse eingesetzt. Ist die Menge größer als 80 Gew.-%, bezogen auf die Gesamtmasse, so können Eigenschaften der Kunststoffe wie beispielsweise die Verarbeitbarkeit gestört werden.

Das Gewichtsmittel des Molekulargewichts M_{w} der erfindungsgemäß als Matrixpolymere zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne daß hierdurch eine Einschränkung erfolgen soll.

Die Dicke der Beschichtung ist vielfach von der Art des Reaktivgemischs und des Formkörpers abhängig. Die Herstellung von sehr dünnen Beschichtungen ist vielfach technisch sehr anspruchsvoll. Andererseits zeigen sehr dicke Beschichtungen häufig eine starke Neigung zu Rissbildungen, wobei die Haftfestigkeit teilweise abnimmt. Von besonderem Interesse sind daher beschichtete Formkörper, deren Beschichtung vorzugsweise eine Dicke im Bereich von 1 µm bis 100 µm, bevorzugt 5 µm bis 75 µm, besonders bevorzugt 8 µm bis 50 µm, insbesondere besonders bevorzugt 10 µm bis 40 µm und ganz besonders bevorzugt 15 µm bis 30 µm aufweist. Die Dicke der Beschichtung kann über die Größe des Zwischenraums zwischen zu beschichtender Oberfläche des Formkörpers und der Innenoberfläche der Spritzgussform eingestellt werden.

Die Temperatur bei der die Formmasse in die Spritzgussform gespritzt wird, hängt insbesondere von der Art des Polymeren sowie der Additive ab. Diese Verarbeitungstemperaturen sind dem Fachmann bekannt. Im Allgemeinen wird die Formmasse bei einer Temperatur im Bereich von 150 bis 350°C, bevorzugt 220 bis 330°C in die Spritzgussform gespritzt.

Die Temperatur des Werkzeugs kann ebenfalls auf die für die jeweilige Formmasse übliche Temperatur eingestellt werden. Vorzugsweise kann die Formmasse auf eine Temperatur im Bereich von 40 bis 160°C, besonders bevorzugt 70 bis 150°C und ganz besonders bevorzugt 60 bis 80°C abgekühlt werden, bevor das Reaktivgemisch in den Zwischenraum einspritzt wird.

Die Temperatur bei der die thermische Härtung des Reaktivgemischs erfolgt, ist von der Art des thermischen Initiators abhängig. Von besonderem Interesse sind insbesondere Verfahren, bei denen die thermische Härtung vorzugsweise bei einer Temperatur im Bereich von 70 bis 160°C, bevorzugt 80 bis 130°C, insbesondere besonders bevorzugt im Bereich 85 bis 120°C und ganz besonders bevorzugt im Bereich 90 bis 110°C in der Spritzgussform erfolgt. Falls die Temperatur bei der thermischen Härtung zu hoch ist, kann eine Bildung von Rissen nach einer UV-Bestrahlung eintreten. Bei zu geringen Temperaturen zeigt die Beschichtung vielfach eine zu hohe Haftung an dem Metall des Spritzgusswerkzeugs, wobei teilweise auch die Kratzfestigkeit durch eine höhere Temperatur bei der thermischen Härtung verbessert werden kann. Die zuvor dargelegten Bereiche haben sich als besonders zweckmäßig erwiesen, ohne dass hierdurch eine Beschränkung erfolgen soll.

Gemäß einer besonderen Ausführungsform kann das Reaktivgemisch beispielsweise bei einer Temperatur im Bereich von 70 bis 85°C, bevorzugt im Bereich von 75 bis 80°C erfolgen. Diese Ausführungsform ist insbesondere vorteilhaft, falls das Reaktivgemisch einen besonders hohen Anteil an Verbindungen mit mindestens vier Doppelbindungen, beispielsweise an Pentaerythrittetra(meth)acrylat umfasst. Gemäß einer weiteren Ausbildung des erfindungsgemäßen Verfahrens kann das Reaktivgemisch bei einer Temperatur im Bereich von 85°C bis 120°C, bevorzugt im Bereich von 90°C bis 110°C gehärtet werden. Diese Ausführungsform ist insbesondere vorteilhaft, falls das Reaktivgemisch einen besonders hohen Anteil an Verbindungen mit zwei oder drei Doppelbindungen umfasst, wie beispielsweise 1,6-Hexandioldi(meth)acrylat.

Das Reaktivgemisch kann bei der gleichen Temperatur gehärtet werden, auf die der Spritzling im Werkzeug abgekühlt wird. Hierbei können der Beginn und die Geschwindigkeit der Polymerisation (Härtung) des Reaktivgemischs durch die Wahl der Art und des Anteils des thermischen Initiators sowie durch die Wahl der Werkzeugtemperatur eingestellt werden. Darüber hinaus kann der Beginn der Härtung durch die Wahl der in der Reaktionsmischung enthaltenen mehrfunktionalen (Meth)acrylate gesteuert werden.

Nach der thermischen Härtung kann das vorgehärtete Reaktivgemisch bei einer Temperatur im Bereich von 0°C bis 120°C, bevorzugt 10°C bis 40°C durch Bestrahlung gehärtet werden. Hierfür können übliche Strahlungsquellen eingesetzt werden, je nach Art des Initiators. Bevorzugt kann die Härtung insbesondere durch UV-Strahlung erfolgen, wobei die Wellenlänge der eingesetzten Strahlungsquelle insbesondere im Bereich von 100 nm bis 500 nm, bevorzugt 200 bis 400 nm liegen kann.

Die vorliegende Erfindung stellt insbesondere neue beschichtete Formkörper zur Verfügung, die ein hervorragendes Eigenschaftsprofil aufweisen und daher vielfältig eingesetzt werden können. Gegenstand der vorliegenden Erfindung sind dementsprechend des Weiteren beschichtete Formkörper umfassend einen durch Spritzgussverfahren erhältlichen Formkörper, der mindestens ein Polymer ausgewählt aus der Gruppe bestehend aus Polymethylmethacrylat, Polymethacrylmethylimid, Styrol-Acrylnitril-Copolymer, Styrol-Maleinsäure-Copolymer und Polymethylmethacrylat-Copolymere umfasst, und eine Beschichtung, die durch Polymerisation von (Meth)acrylaten mit mindestens zwei Doppelbindungen erhältlich ist.

Der Formkörper zeichnet sich insbesondere durch eine hohe Kratzfestigkeit aus, die beispielsweise mit einem Reibradtest bestimmt werden kann. Von besonderem Interesse sind insbesondere beschichtete, transparente Formkörper, deren Haze-Wert nach einem Kratzfestigkeitstest gemäß ASTM 1044 (12/05) (Auflage 500g, Anzahl der Zyklen = 100) um höchstens 10%, besonders bevorzugt um höchstens 6% und ganz besonders bevorzugt um höchstens 3% zunimmt. Die Kratzfestigkeit gemäß ASTM 1044 (12/05) (Auflage 500g, Anzahl der Zyklen = 100) kann darüber hinaus durch die Abnahme des Glanzes bei 20° gemessen werden. Hierbei zeigen bevorzugte beschichtete Formkörper eine Abnahme des Glanzes bei 20° nach einem Kratzfestigkeitstest gemäß ASTM 1044 (12/05), (Auflage 500g, Anzahl der Zyklen = 100) von höchstens 10%, besonders bevorzugt um höchstens 6% und ganz besonders bevorzugt um höchstens 3%. Die Abnahme des Glanzes bei 20° kann nach DIN EN ISO 2813 bestimmt werden. Durch die Bestimmung einer Glanzänderung kann beispielsweise die Kratzfestigkeit von eingefärbten Formkörpern oder von eingefärbten Beschichtungen gemessen werden.

Darüber hinaus zeigen die erfindungsgemäßen Formkörper eine hervorragende Haftfestigkeit der Beschichtung, die gemäß dem Gitterschnitttest untersucht werden kann. Hierzu wird die Beschichtung kreuzweise angeritzt und dadurch in schachbrettartige Einzelsegmente unterteilt. Im Allgemeinen werden hierbei mindestens 20 Einzelsegmente, bevorzugt mindestens 25 Einzelsegmente gebildet. Der Abstand der Linien beträgt hierbei in etwa 1 mm. Dann wird ein 25 mm breites Klebeband aufgeklebt und wieder abgezogen. Die Ablösekraft des Klebebandes pro cm², gemessen gemäß DIN EN ISO 2409 beträgt ca. 10N je 25mm Breite. Zur Durchführung des Versuchs kann beispielsweise ein Klebeband verwendet werden, das unter der Handelsbezeichnung Typ 4104 von der Firma Tesa erhältlich ist. Bevorzugt erzielen die beschichteten Formkörper eine Bewertung gemäß dem Gitterschnitttest von höchstens 1, besonders bevorzugt von 0. Eine Bewertung von 1 erzielen die beschichteten Formkörper falls nicht wesentlich mehr als 5% der Einzelsegmente abgelöst werden. Falls keines der Einzelsegmente (0%) abgelöst werden, erzielen die beschichteten Formkörper eine Bewertung von 0.

Darüber hinaus sind bevorzugte Beschichtungen frei von Rissen und zeigen eine hohe Chemikalienbeständigkeit. So widerstehen die Beschichtungen insbesondere Ethanol, Ethanol / Wasser (70/30), Benzin, Pankreatin, Schwefelsäure (1 %ig), wobei durch Kontakt mit diesen Verbindungen keine Spannungsrisse gebildet werden.

Bevorzugte Formkörper können ein E-Modul größer oder gleich 1200 MPa, vorzugsweise größer oder gleich 1600 MPa gemäß ISO 527 (bei 1 mm/min) aufweisen. Des Weiteren können erfindungsgemäße Formkörper eine Schlagzähigkeit nach Charpy größer oder gleich 10 kJ / m², vorzugsweise größer oder gleich 15 kJ / m² gemäß ISO179 zeigen.

Darüber hinaus können Kunststoffe mit Zugfestigkeiten größer oder gleich 55, vorzugsweise größer oder gleich 60 gemäß DIN 53 455-1-3 (bei 1 mm/min) erzeugt werden, die eine ausgezeichnete Kratzfestigkeit aufweisen.

Besonders überraschend ist, dass der kratzfeste Formkörper einen Transmissionsgrad τ_{D65} ≥ 88 %, vorzugsweise ≥ 90 % gemäß DIN 5036 Teil 3 aufweisen kann. Durch die zuvor aufgeführten mechanischen und/oder optischen Eigenschaften des Formkörpers soll keine Beschränkung der Erfindung erfolgen. Diese Angaben dienen vielmehr zur Darstellung der besonders hervorragenden Eigenschaften des Formkörpers, die bei gleichzeitig guter Kratzfestigkeit erzielt werden können.

Des Weiteren können die Formkörper der vorliegenden Erfindung eine ausgezeichnete Bewitterungsstabilität zeigen. So beträgt die Bewitterungsstabilität gemäß dem Xenon-Test bevorzugt mindestens 1.000 Stunden, besonders bevorzugt mindestens 2.000 Stunden. Diese Stabilität kann beispielsweise durch eine geringe Abnahme der Transmission oder durch eine geringe Abnahme der Kratzfestigkeit bestimmt werden. Von besonderem Interesse sind insbesondere beschichtete Formkörper, deren Transmission nach 2000 Stunden Xenon-Bestrahlung höchstens um 10%, besonders bevorzugt um höchstens 5% abnimmt, bezogen auf den Transmissionswert zu Beginn der Bestrahlung. Darüber hinaus können bevorzugte Formkörper eine Zunahme des Haze-Wertes nach einem Kratzfestigkeitstest gemäß ASTM 1044 (12/05) (Auflage 500g, Anzahl der Zyklen = 100) auf höchstens 25%, besonders bevorzugt auf höchstens 15% nach einer Xenon-Bestrahlung von 2000 Stunden zeigen. Des Weiteren ist die Bestimmung der Kratzfestigkeit nach einer Xenonbestrahlung auch über die Abnahme des Glanzes möglich. Hierbei zeigen bevorzugte beschichtete Formkörper eine Abnahme des Glanzes bei 20° nach einem Kratzfestigkeitstest gemäß ASTM 1044 (12/05), (Auflage 500g, Anzahl der Zyklen = 100) von höchstens 25%, besonders bevorzugt um höchstens 20% und ganz besonders bevorzugt um höchstens 15% nach einer Xenon-Bestrahlung von 2000 Stunden.

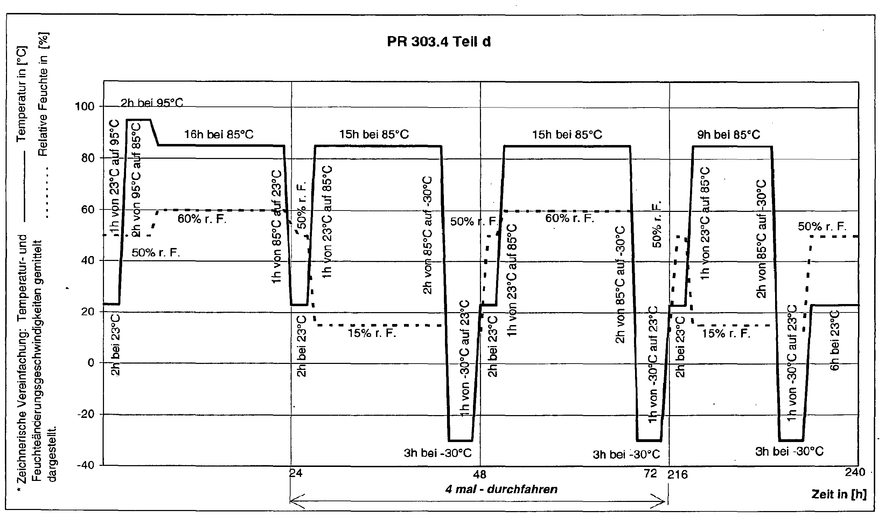

Darüber hinaus zeigen bevorzugte Beschichtungen, die mit einer erfindungsgemäßen Beschichtungsmittel erhalten wurden, eine hohe Beständigkeit in einem Klimawechseltest, wobei nur eine geringe Rissbildung trotz einer Verformung des Grundkörpers auftritt. Vorzugsweise kann zur Durchführung des Klimawechseltests das in Figur 1 dargestellte Belastungsprogramm eingesetzt werden (BMW PR 303 - Teil d).

Nachfolgend soll die vorliegende Erfindung anhand von Beispielen und Vergleichsbeispielen erläutert werden, ohne dass hierdurch eine Beschränkung erfolgen soll.

### Vergleichsbeispiel 1

In einem Handversuch wurde die Leistungsfähigkeit der vorliegenden Reaktivgemische untersucht. Hierzu wurde zunächst ein Spritzling (200 x 100 x 3mm) aus einer PMMA-Formmasse (8N, kommerziell erhältlich von der Firma Röhm GmbH) hergestellt und auf 85°C vorgeheizt. Zum Vorheizen wurde der Spritzling zwischen zwei Metallzylinder (hochglänzend) gelegt, wobei der untere Zylinder einen Durchmesser von 150 mm und der obere Metallzylinder einen Durchmesser von 120 mm aufwies. Um ein zu starkes Abkühlen des oberen Metallzylinders zu verhindern, wurde dieser nach ca. 5-minütigem Temperieren des Spritzlings heruntergenommen, daneben auf der Heizplatte abgelegt und weiter beheizt (bei 85°C temperiert). Währenddessen blieb der Spritzling flach auf dem großen Metallzylinder liegen und wurde nochmals 5 Minuten ohne Beschwerung weiter beheizt.

Anschließend (nach 10minütigem Temperieren des Spritzlings) gab man 1,5g eines Reaktivgemischs, das 68,60 Gew.-% 1,6-Hexandioldiacrylat, 29,40 Gew.-% Trimethylolpropantriacrylat, 1 Gew.-% Bis(4-tert.-butylcyclohexyl)peroxydicarbonat (thermischer Initiator) und 1 Gew.-% 1-Benzoylcyclohexanol (®Irgacure 184) umfasste, auf den Spritzling und beschwerte (presste) die Reaktionslösung sofort mit dem 85°C heißen, kleinen Metallzylinder. Danach lies man die Beschichtung 60sec aushärten, wobei die Reaktion nach ca. 15 Sekunden nach dem Auflegen des kleinen Metallzylinders begann. Dies konnte anhand von heraustretender Reaktionslösung gemessen werden. Es wurde eine rissfreie Beschichtung erhalten.

Die Kratzfestigkeit der Beschichtung wurde in einem Handtest mit Stahlwolle untersucht, wobei eine Skala von 0 (sehr hohe Kratzfestigkeit) bis 7 (sehr geringe Kratzfestigkeit) angewendet wurde. Die so erhaltene Beschichtung erzielte eine Kratzfestigkeit von 6 (geringe Kratzfestigkeit).

### Beispiel 1

Das Vergleichsbeispiel 1 wurde im Wesentlichen wiederholt, wobei jedoch nach dem thermischen Härten der beschichtete Spritzling durch UV-Bestrahlung gehärtet wurde. Die Rissfreiheit der Beschichtung blieb erhalten. Die Kratzfestigkeit der Beschichtung wurde in einem Handtest mit Stahlwolle untersucht, wobei die so erhaltene Beschichtung eine Kratzfestigkeit von 3 (gute Kratzfestigkeit) erzielte.

### Vergleichsbeispiel 2

Das Vergleichsbeispiel 1 wurde im Wesentlichen wiederholt, wobei jedoch ein Reaktivgemisch eingesetzt wurde, das 67,90 Gew.-% 1,6-Hexandioldiacrylat, 29,10 Gew.-% Trimethylolpropantriacrylat, 1 Gew.-% Bis(4-tert.-butylcyclohexyl)peroxydicarbonat (thermischer Initiator) und 2 Gew.-% 1-Benzoylcyclohexanol (®Irgacure 184) umfasste.

Die Kratzfestigkeit der Beschichtung wurde in einem Handtest mit Stahlwolle untersucht, wobei die so erhaltene Beschichtung eine Kratzfestigkeit von 6 (geringe Kratzfestigkeit) erzielte.

### Beispiel 2

Das Vergleichsbeispiel 2 wurde im Wesentlichen wiederholt, wobei jedoch nach dem thermischen Härten der beschichtete Spritzling durch UV-Bestrahlung gehärtet wurde. Die Rissfreiheit der Beschichtung blieb erhalten. Die Kratzfestigkeit der Beschichtung wurde in einem Handtest mit Stahlwolle untersucht, wobei die so erhaltene Beschichtung eine Kratzfestigkeit von 3 (gute Kratzfestigkeit) erzielte.

### Beispiel 3

Das Beispiel 1 wurde im Wesentlichen wiederholt, wobei jedoch ein Reaktivgemisch eingesetzt wurde, das 97,75 Gew.-% Trimethylolpropantriacrylat, 0,25 Gew.-% Bis(4-tert.-butylcyclohexyl)peroxydicarbonat (thermischer Initiator) und 2 Gew.-% 1-Benzoylcyclohexanol (®Irgacure 184) umfasste.

Die thermische Härtungsreaktion begann nach ca. 15 Sekunden. Nach der UV-Härtung wurde eine rissfreie Beschichtung erhalten, die eine Dicke von ca. 20 µm aufwies (Durchschnittswert aus vier Einzelmessungen).

Die Kratzfestigkeit der Beschichtung wurde in einem Handtest mit Stahlwolle untersucht, wobei die so erhaltene Beschichtung eine Kratzfestigkeit von 1 (sehr gute Kratzfestigkeit) erzielte.

### Beispiel 4

Das Beispiel 3 wurde im Wesentlichen wiederholt, wobei jedoch die Reaktionstemperatur von 85°C auf 80°C verringert wurde.

Die thermische Härtungsreaktion begann nach ca. 25 Sekunden. Nach der UV-Härtung wurde eine rissfreie Beschichtung erhalten, die eine Dicke von ca. 25 µm aufwies (Durchschnittswert aus vier Einzelmessungen).

Die Kratzfestigkeit der Beschichtung wurde in einem Handtest mit Stahlwolle untersucht, wobei die so erhaltene Beschichtung eine Kratzfestigkeit von 1 (sehr gute Kratzfestigkeit) erzielte.

### Beispiel 5

Das Beispiel 4 wurde im Wesentlichen wiederholt, wobei jedoch ein Reaktivgemisch eingesetzt wurde, das 97,50 Gew.-% Trimethylolpropantriacrylat, 0,50 Gew.-% Bis(4-tert.-butylcyclohexyl)peroxydicarbonat (thermischer Initiator) und 2 Gew.-% 1-Benzoylcyclohexanol (®Irgacure 184) umfasste.

Die thermische Härtungsreaktion begann nach ca. 15 Sekunden. Nach der UV-Härtung wurde eine rissfreie Beschichtung erhalten, die eine Dicke von ca. 12 µm aufwies (Durchschnittswert aus vier Einzelmessungen).

Die Kratzfestigkeit der Beschichtung wurde in einem Handtest mit Stahlwolle untersucht, wobei die so erhaltene Beschichtung eine Kratzfestigkeit von 1 (sehr gute Kratzfestigkeit) erzielte.

### Beispiel 6

Das Beispiel 4 wurde im Wesentlichen wiederholt, wobei jedoch ein Reaktivgemisch eingesetzt wurde, das 97,00 Gew.-% Trimethylolpropantriacrylat, 1,00 Gew.-% Bis(4-tert.-butylcyclohexyl)peroxydicarbonat (thermischer Initiator) und 2 Gew.-% 1-Benzoylcyclohexanol (®Irgacure 184) umfasste.

Die thermische Härtungsreaktion begann nach ca. 8 Sekunden. Nach der UV-Härtung wurde eine rissfreie Beschichtung erhalten, die eine Dicke von ca. 13 µm aufwies (Durchschnittswert aus vier Einzelmessungen).

Die Kratzfestigkeit der Beschichtung wurde in einem Handtest mit Stahlwolle untersucht, wobei die so erhaltene Beschichtung eine Kratzfestigkeit von 1 (sehr gute Kratzfestigkeit) erzielte.

### Beispiel 7

Das Beispiel 4 wurde im Wesentlichen wiederholt, wobei jedoch ein Reaktivgemisch eingesetzt wurde, das 9 g Trimethylolpropantriacrylat, 1 g Pentaerythrittetraacrylat, 0,05 g Bis(4-tert.-butylcyclohexyl)peroxydicarbonat (thermischer Initiator) und 0,20 g 1-Benzoylcyclohexanol (®Irgacure 184) umfasste.

Nach der UV-Härtung wurde eine rissfreie Beschichtung erhalten, die eine Dicke von ca. 27 µm aufwies (Durchschnittswert aus vier Einzelmessungen).

Die Kratzfestigkeit der Beschichtung wurde in einem Handtest mit Stahlwolle untersucht, wobei die so erhaltene Beschichtung eine Kratzfestigkeit von ca. 0,5 (sehr gute Kratzfestigkeit) erzielte.

### Beispiel 8

Das Beispiel 7 wurde im Wesentlichen wiederholt, wobei jedoch ein Reaktivgemisch eingesetzt wurde, das 8 g Trimethylolpropantriacrylat, 2 g Pentaerythrittetraacrylat, 0,05 g Bis(4-tert.-butylcyclohexyl)peroxydicarbonat (thermischer Initiator) und 0,20 g 1-Benzoylcyclohexanol (®Irgacure 184) umfasste.

Nach der UV-Härtung wurde eine rissfreie Beschichtung erhalten, die eine Dicke von ca. 14 µm aufwies (Durchschnittswert aus vier Einzelmessungen).

Die Kratzfestigkeit der Beschichtung wurde in einem Handtest mit Stahlwolle untersucht, wobei die so erhaltene Beschichtung eine Kratzfestigkeit von 0 (ausgezeichnete Kratzfestigkeit; durch Muskelkraft konnten keine Kratzer erzeugt werden) erzielte.

### Beispiel 9

Das Beispiel 7 wurde im Wesentlichen wiederholt, wobei jedoch ein Reaktivgemisch eingesetzt wurde, das 5 g Trimethylolpropantriacrylat, 5 g Pentaerythrittetraacrylat, 0,05 g Bis(4-tert.-butylcyclohexyl)peroxydicarbonat (thermischer Initiator) und 0,20 g 1-Benzoylcyclohexanol (®Irgacure 184) umfasste.

Nach der UV-Härtung wurde eine rissfreie Beschichtung erhalten, die eine Dicke von ca. 16 µm aufwies (Durchschnittswert aus vier Einzelmessungen).

Die Kratzfestigkeit der Beschichtung wurde in einem Handtest mit Stahlwolle untersucht, wobei die so erhaltene Beschichtung eine Kratzfestigkeit von 0 (ausgezeichnete Kratzfestigkeit; durch Muskelkraft konnten keine Kratzer erzeugt werden) erzielte.

### Beispiel 10

Das Beispiel 7 wurde im Wesentlichen wiederholt, wobei jedoch ein Reaktivgemisch eingesetzt wurde, das 3 g Trimethylolpropantriacrylat, 7 g Pentaerythrittetraacrylat, 0,025 g Bis(4-tert.-butylcyclohexyl)peroxydicarbonat (thermischer Initiator) und 0,20 g 1-Benzoylcyclohexanol (®Irgacure 184) umfasste.

Die thermische Härtung erfolgte bei 85°C, wobei eine Härtungszeit von ca. 30 Sekunden ausreichend war. Nach der UV-Härtung wurde eine rissfreie Beschichtung erhalten.

Die Kratzfestigkeit der Beschichtung wurde in einem Handtest mit Stahlwolle untersucht, wobei die so erhaltene Beschichtung eine Kratzfestigkeit von 0 (ausgezeichnete Kratzfestigkeit) erzielte.

### Beispiel 11

In einem Handversuch wurde die Leistungsfähigkeit der vorliegenden Reaktivgemische untersucht. Hierzu wurde zunächst ein Spritzling (200 x 100 x 3mm) aus einer PMMA-Formmasse (8N, kommerziell erhältlich von der Firma Röhm GmbH) hergestellt und auf 85°C vorgeheizt. Zum Vorheizen wurde der Spritzling zwischen zwei Metallzylinder (hochglänzend) gelegt, wobei der untere Zylinder einen Durchmesser von 150 mm und der obere Metallzylinder einen Durchmesser von 120 mm aufwies. Um ein zu starkes Abkühlen des oberen Metallzylinders zu verhindern, wurde dieser nach ca. 5-minütigem Temperieren des Spritzlings heruntergenommen, daneben auf der Heizplatte abgelegt und weiter beheizt (bei 85°C temperiert). Währenddessen blieb der Spritzling flach auf dem großen Metallzylinder liegen und wurde nochmals 5 Minuten ohne Beschwerung weiter beheizt.

Anschließend (nach 10minütigem Temperieren des Spritzlings) gab man 1,5g eines Reaktivgemischs, das 5 g Trimethylolpropantriacrylat, 5 g Pentaerythrittetraacrylat, 0,025 g Bis(4-tert.-butylcyclohexyl)peroxydicarbonat (thermischer Initiator) und 0,20 g 1-Benzoylcyclohexanol (®Irgacure 184) umfasste, auf den Spritzling und beschwerte (presste) die Reaktionslösung sofort mit dem 85°C heißen, kleinen Metallzylinder und einem 3 kg schweren Metallblock. Danach lies man die Beschichtung 30 Sekunden aushärten. Es wurde eine rissfreie Beschichtung erhalten.

Nach dem thermischen Härten wurde der beschichtete Spritzling durch UV-Bestrahlung gehärtet. Hierbei wurde die erkaltete Beschichtung ca. 1 Minute ohne Stickstoff mit UV-Licht belichtet. Es wurde eine rissfreie, 20µm dicke Beschichtung erhalten. Die Kratzfestigkeit der Beschichtung wurde in einem Handtest mit Stahlwolle untersucht, wobei die so erhaltene Beschichtung eine Kratzfestigkeit von 0 (ausgezeichnete Kratzfestigkeit) erzielte.

### Beispiel 12

Das Beispiel 11 wurde im Wesentlichen wiederholt, wobei jedoch eine Schichtdicke von 80 µm hergestellt wurde. Hierzu wurde der Spritzling mit einer ringförmig ausgeschnittenen Polyesterfolie belegt, die eine Dicke von ca. 80 µm aufwies.

Nach der thermischen Härtung wurde eine zunächst rissfreie Beschichtung erhalten. Durch die Bestrahlung mit UV-Licht trat jedoch eine deutliche Rissbildung auf. Die Kratzfestigkeit der Beschichtung wurde in einem Handtest mit Stahlwolle untersucht, wobei die so erhaltene Beschichtung eine Kratzfestigkeit von 0 (ausgezeichnete Kratzfestigkeit) erzielte.

### Beispiel 13

In einem Handversuch wurde die Leistungsfähigkeit der vorliegenden Reaktivgemische untersucht. Hierzu wurde zunächst ein Spritzling (200 x 100 x 3mm) aus einer PMMA-Formmasse (8N, kommerziell erhältlich von der Firma Röhm GmbH) hergestellt und auf 85°C vorgeheizt. Zum Vorheizen wurde der Spritzling zwischen zwei Metallblöcke (hochglänzend) gelegt, die eine Größe von 170*170*27mm aufwiesen. Um ein zu starkes Abkühlen des oberen Metallblocks zu verhindern, wurde dieser nach ca. 5-minütigem Temperieren des Spritzlings heruntergenommen, daneben auf der Heizplatte abgelegt und weiter beheizt (bei 85°C temperiert). Währenddessen blieb der Spritzling flach auf dem unteren Metallblock liegen und wurde nochmals 5 Minuten ohne Beschwerung weiter beheizt.

Anschließend (nach 10minütigem Temperieren des Spritzlings) gab man 1,5g eines Reaktivgemischs, das 5 g Trimethylolpropantriacrylat, 5 g Pentaerythrittetraacrylat, 0,05 g Bis(4-tert.-butylcyclohexyl)peroxydicarbonat (thermischer Initiator) und 0,20 g 1-Benzoylcyclohexanol (®Irgacure 184) umfasste, auf den Spritzling und presste die Reaktionslösung sofort mit dem 85°C heißen, oberen Metallblock. Danach lies man die Beschichtung 60 Sekunden aushärten. Es wurde eine rissfreie Beschichtung erhalten.

Nach dem thermischen Härten wurde der beschichtete Spritzling durch UV-Bestrahlung gehärtet. Hierbei wurde die erkaltete Beschichtung ca. 1 Minute ohne Stickstoff mit UV-Licht belichtet. Es wurde eine rissfreie Beschichtung erhalten.

Die Kratzfestigkeit der Beschichtung wurde mit einem ASTM 1044 (12/05), (Auflage 500g, Anzahl der Zyklen = 100) untersucht. Hierbei erhöhte sich der Haze des Formkörpers auf 2,8%. Des Weiteren wurde die Haftfestigkeit der Beschichtung mit einem Gitterschnitttest bestimmt. Hierzu wird die Beschichtung kreuzweise angeritzt und dadurch in schachbrettartige Einzelsegmente unterteilt. Der Abstand der Linien beträgt hierbei in etwa 1mm. Dann wird ein Klebeband aufgeklebt und wieder abgezogen. Zur Durchführung des Versuchs wurde ein Klebeband verwendet werden, das unter der Handelsbezeichnung Typ 4104 von der Firma Tesa erhältlich ist. Die Haftfestigkeit der Beschichtung war so hoch, dass kein Einzelsegment abgelöst wurde.

### Beispiel 14

Das Beispiel 13 wurde im Wesentlichen wiederholt, wobei jedoch ein Reaktivgemisch eingesetzt wurde, das 10 g Trimethylolpropantriacrylat, 0,05 g Bis(4-tert.-butylcyclohexyl)peroxydicarbonat (thermischer Initiator) und 0,20 g 1-Benzoylcyclohexanol (®Irgacure 184) umfasste.

Die Kratzfestigkeit der Beschichtung wurde mit einem Reibradtest gemäß ASTM 1044 (12/05), (Auflage 500g, Anzahl der Zyklen = 100) untersucht. Hierbei erhöhte sich der Haze des Formkörpers auf 5,4%. Des Weiteren wurde die Haftfestigkeit der Beschichtung mit einem Gitterschnitttest bestimmt. Hierzu wird die Beschichtung kreuzweise angeritzt und dadurch in schachbrettartige Einzelsegmente unterteilt. Der Abstand der Linien beträgt hierbei in etwa 1 mm. Dann wird ein Klebeband aufgeklebt und wieder abgezogen. Zur Durchführung des Versuchs wurde ein Klebeband verwendet werden, das unter der Handelsbezeichnung Typ 4104 von der Firma Tesa erhältlich ist. Die Haftfestigkeit der Beschichtung war so hoch, dass kein Einzelsegment abgelöst wurde.

Des Weiteren wurde ein so hergestellter Formkörper einem Klimawechseltest gemäß (BMW PR 303 - Teil d) unterzogen, wobei das Belastungsprogramm in Figur 1 dargestellt ist. Der Formkörper wurde durch diesen Versuch stark verformt, wobei die Beschichtung jedoch nur eine sehr geringe Rissbildung zeigte.

Darüber hinaus wurde ein so hergestellter Formkörper 2000 Stunden mit Xenon-Licht (nach DIN EN ISO 4892, Teil 2, Xenotestgerät: Atlas/Heraeus Typ 1200) bestrahlt, wodurch die Transmission lediglich von 91,8% auf 91,1 % abnahm. Die Kratzfestigkeit der Beschichtung wurde durch den Xenon-Test ebenfalls geringfügig verschlechtert. Der Haze des Formkörpers nahm von 5,4% auf 22,3%zu.

### Beispiel 15

Das Beispiel 13 wurde im Wesentlichen wiederholt, wobei jedoch ein Reaktivgemisch eingesetzt wurde, das 5 g Trimethylolpropantriacrylat, 5 g 1,6-Hexandioldiacrylat, 0,05 g Bis(4-tert.-butylcyclohexyl)peroxydicarbonat (thermischer Initiator) und 0,20 g 1-Benzoylcyclohexanol (®Irgacure 184) umfasste.

Die Kratzfestigkeit der Beschichtung wurde mit einem Reibradtest gemäß ASTM 1044 (12/05), (Auflage 500g, Anzahl der Zyklen = 100) untersucht. Hierbei erhöhte sich der Haze des Formkörpers auf 5,8%. Des Weiteren wurde die Haftfestigkeit der Beschichtung mit einem Gitterschnitttest bestimmt. Hierzu wird die Beschichtung kreuzweise angeritzt und dadurch in schachbrettartige Einzelsegmente unterteilt. Der Abstand der Linien beträgt hierbei in etwa 1 mm. Dann wird ein Klebeband aufgeklebt und wieder abgezogen. Zur Durchführung des Versuchs wurde ein Klebeband verwendet werden, das unter der Handelsbezeichnung Typ 4104 von der Firma Tesa erhältlich ist. Die Haftfestigkeit der Beschichtung war so hoch, dass kein Einzelsegment abgelöst wurde.

Des Weiteren wurde ein so hergestellter Formkörper einem Klimawechseltest gemäß (BMW PR 303 - Teil d) unterzogen, wobei das Belastungsprogramm in Figur 1 dargestellt ist. Der Formkörper wurde durch diesen Versuch stark verformt, wobei die Beschichtung jedoch keine Rissbildung zeigte.

Darüber hinaus wurde ein so hergestellter Formkörper 2000 Stunden mit Xenon-Licht (nach DIN EN ISO 4892, Teil 2, Xenotestgerät: Atlas/Heraeus Typ 1200) bestrahlt, wodurch die Transmission lediglich von 91,4% auf 91,1% abnahm. Die Kratzfestigkeit der Beschichtung wurde durch den Xenon-Test ebenfalls geringfügig verschlechtert. Der Haze des Formkörpers nahm von 5,8% auf 13,5% zu.

### Beispiel 16

Das Beispiel 13 wurde im Wesentlichen wiederholt, wobei jedoch ein Reaktivgemisch eingesetzt wurde, das 7,2 g Trimethylolpropantriacrylat, 1,8 g 1,6-Hexandioldiacrylat, 1,0 g Polysiloxan (Gleitmittel; RC 725, kommerziell erhältlich von der Fa. Goldschmidt GmbH), 0,1 g Bis(4-tert.-butylcyclohexyl)peroxydicarbonat (thermischer Initiator) und 0,20 g 1-Benzoylcyclohexanol (®Irgacure 184) umfasste. Darüber hinaus wurde eine schwarz eingefärbte PMMA-Formmasse (8N schwarz 90084, kommerziell erhältlich von der Firma Röhm GmbH) eingesetzt.

Die thermische Härtung erfolgte bei 90°C, wobei eine Härtungszeit von ca. 60 Sekunden ausreichend war. Nach der UV-Härtung wurde eine rissfreie Beschichtung erhalten.

Die Kratzfestigkeit der Beschichtung wurde mit einem Reibradtest gemäß ASTM 1044 (12/05), (Auflage 500g Anzahl der Zyklen = 100) untersucht. Hierbei wurde eine Abnahme des Glanzes bei 20° nach DIN EN ISO 2813 von 6,8% erhalten.

### Beispiel 17

Das Beispiel 16 wurde im Wesentlichen wiederholt, wobei jedoch die Reaktionstemperatur von 90°C auf 95°C erhöht wurde.

Die Kratzfestigkeit der Beschichtung wurde mit einem Reibradtest gemäß ASTM 1044 (12/05), (Auflage 500g Anzahl der Zyklen = 100) untersucht. Hierbei wurde eine Abnahme des Glanzes bei 20° nach DIN EN ISO 2813 von 5,3% erhalten.

### Beispiel 18

Das Beispiel 15 wurde im Wesentlichen wiederholt, wobei jedoch ein Reaktivgemisch eingesetzt wurde, das 5 g Trimethylolpropantriacrylat, 5 g 1,6-Hexandioldiacrylat, 0,1 g Bis(4-tert.-butylcyclohexyl)peroxydicarbonat (thermischer Initiator) und 0,20 g 1-Benzoylcyclohexanol (®Irgacure 184) umfasste. Darüber hinaus wurde eine schwarz eingefärbte PMMA-Formmasse (8N schwarz 90084, kommerziell erhältlich von der Firma Röhm GmbH) eingesetzt.

Die thermische Härtung erfolgte bei 90°C, wobei eine Härtungszeit von ca. 30 Sekunden ausreichend war. Nach der UV-Härtung wurde eine rissfreie Beschichtung erhalten.

Die Kratzfestigkeit der Beschichtung wurde mit einem Reibradtest gemäß ASTM 1044 (12/05), (Auflage 500g Anzahl der Zyklen = 100) untersucht. Hierbei wurde eine Abnahme des Glanzes bei 20° nach DIN EN ISO 2813 von 4,7% erhalten.

Des Weiteren wurde ein so hergestellter Formkörper einem Klimawechseltest gemäß (BMW PR 303 - Teil d) unterzogen, wobei das Belastungsprogramm in Figur 1 dargestellt ist. Der Formkörper wurde durch diesen Versuch stark verformt, wobei die Beschichtung jedoch keine Rissbildung zeigte.

### Beispiel 19

Das Beispiel 18 wurde im Wesentlichen wiederholt, wobei jedoch ein Reaktivgemisch eingesetzt wurde, das 7 g Trimethylolpropantriacrylat, 3 g 1,6-Hexandioldiacrylat, 0,1 g Bis(4-tert.-butylcyclohexyl)peroxydicarbonat (thermischer Initiator) und 0,20 g 1-Benzoylcyclohexanol (®Irgacure 184) umfasste.

Die thermische Härtung erfolgte bei 90°C, wobei eine Härtungszeit von ca. 60 Sekunden ausreichend war. Nach der UV-Härtung wurde eine rissfreie Beschichtung erhalten.

Die Kratzfestigkeit der Beschichtung wurde mit einem Reibradtest gemäß ASTM 1044 (12/05), (Auflage 500g Anzahl der Zyklen = 100) untersucht. Hierbei wurde eine Abnahme des Glanzes bei 20° nach DIN EN ISO 2813 von 1,8% erhalten.

Des Weiteren wurde ein so hergestellter Formkörper einem Klimawechseltest gemäß (BMW PR 303 - Teil d) unterzogen, wobei das Belastungsprogramm in Figur 1 dargestellt ist. Der Formkörper wurde durch diesen Versuch stark verformt, wobei die Beschichtung jedoch keine Rissbildung zeigte.

## Patentansprüche

1. Verfahren zur Herstellung von beschichteten Formkörpern, bei dem man eine Formmasse in eine Spritzgussform spritzt und unter Erhalt eines Formkörpers abkühlt, die Spritzgussform so verändert, dass ein Zwischenraum zwischen zu beschichtender Oberfläche des Formkörpers und der Innenoberfläche der Spritzgussform entsteht, den entstandenen Zwischenraum durch Spritzguss mit einem Reaktivgemisch füllt, und das Reaktivgemisch zunächst thermisch härtet; wobei das Reaktivgemisch mindestens 40 Gew.-% an (Meth)acrylaten mit mindestens zwei Doppelbindungen und mindestens einen thermischen Initiator umfasst, und
die Formmasse mindestens ein Polymer umfasst, das ausgewählt ist aus der Gruppe bestehend aus Polymethylmethacrylat, Polymethacrylmethylimid, Polymethylmethacrylat-Copolymer, Polystyrol-Copolymer und Polycarbonat
**dadurch gekennzeichnet, dass**
das Reaktivgemisch mindestens einen Fotoinitiator umfasst und nach der thermischen Härtung durch Bestrahlung härtet.

2. Verfahren gemäß Anspruch 1, wobei das Polystyrol-Copolymer Styrol-Acrylnitril-Copolymer oder Styrol-Maleinsäure-Copolymer umfasst.

3. Verfahren gemäß Anspruch 1, wobei die Formmasse mindestens 50 Gew.-% Polymethylmethacrylat, Polymethacrylmethylimid und/oder Polymethylmethacrylat-Copolymere umfasst.

4. Verfahren gemäß mindestens einem der Ansprüche 1 bis 3, wobei das Reaktivgemisch mindestens ein (Meth)acrylat mit drei oder mehr Doppelbindungen umfasst, wobei der Anteil an (Meth)acrylaten mit drei oder mehr Doppelbindungen mindestens 25 Gew.-%, bezogen auf das Gewicht des Reaktivgemischs, beträgt.

5. Verfahren gemäß mindestens einem der Ansprüche 1 bis 4, wobei das Reaktivgemisch höchstens 75 Gew.-% an Monomeren mit zwei oder weniger Doppelbindungen umfasst.

6. Verfahren gemäß mindestens einem der Ansprüche 1 bis 5, wobei das Reaktivgemisch eine dynamische Viskosität im Bereich von 1 bis 200 mPa*s bei 25°C aufweist.

7. Verfahren gemäß mindestens einem der Ansprüche 1 bis 6, wobei das Reaktivgemisch 0,01 Gew.-% bis 3 Gew.-% Fotoinitiator und 0,03 Gew.-% bis 5 Gew.-% thermischen Initiator, bezogen auf das Gewicht des Reaktivgemischs, umfasst.

8. Verfahren gemäß mindestens einem der Ansprüche 1 bis 7, wobei das Reaktivgemisch 1,6-Hexandioldiacrylat, Trimethylolpropantriacrylat und/oder Pentaerythrittetraacrylat umfasst.

9. Verfahren gemäß mindestens einem der Ansprüche 1 bis 8, wobei das Reaktivgemisch Farbmittel, Metallic-Pigmente, UV-Stabilisatoren, Füllstoffe, mindestens ein Gleitmittel und/oder Nanomaterialien umfasst.

10. Verfahren gemäß mindestens einem der Ansprüche 1 bis 9, wobei die Dicke der Beschichtung im Bereich von 5 µm bis 75 µm liegt.

11. Verfahren gemäß mindestens einem der Ansprüche 1 bis 10, wobei die Formmasse bei einer Temperatur im Bereich von 220 bis 330°C in die Spritzgussform gespritzt wird und anschließend auf eine Temperatur im Bereich von 70 bis 150°C abgekühlt wird, bevor das Reaktivgemisch in den Zwischenraum einspritzt wird.

12. Verfahren gemäß mindestens einem der Ansprüche 1 bis 11, wobei das Reaktivgemisch bei einer Temperatur im Bereich von 80 bis 130°C in der Spritzgussform thermisch gehärtet wird und anschließend das thermisch gehärtete Reaktivgemisch bei einer Temperatur im Bereich von 10 bis 40°C durch Bestrahlung gehärtet wird.

13. Beschichteter Formkörper, der nach einem Verfahren gemäß mindestens einem der Ansprüche 1 bis 12 erhältlich ist, umfassend einen durch Spritzgussverfahren erhältlichen Formkörper und eine Beschichtung, die durch Polymerisation von (Meth)acrylaten mit mindestens zwei Doppelbindungen erhältlich ist, wobei die Beschichtung eine Haftfestigkeitsbewertung von höchstens 1 gemäß dem Gitterschnitttest und eine Abnahme des Glanzes bei 20° nach einem Kratzfestigkeitstest gemäß ASTM 1044 (12/05), (Auflage 500 g, Anzahl der Zyklen = 100) von höchstens 10% aufweist.

14. Formkörper gemäß Anspruch 13, wobei die Beschichtung eine Dicke im Bereich von 5 µm bis 75 µm aufweist.

15. Formkörper gemäß mindestens einem der Ansprüche 13 bis 14, wobei die Abnahme des Glanzes bei 20°des Formkörper nach einem Kratzfestigkeitstest nach ASTM 1044 (12/05) um höchstens 6% beträgt.

## Claims

1. Process for the production of coated mouldings, in which a moulding material is injected into an injection mould and cooled to give a moulding, the injection mould is changed so that a space forms between that surface of the moulding which is to be coated and the inner surface of the injection mould, the resulting space is filled by injection moulding with a reactive mixture, and the reactive mixture is first thermally cured; and wherein the reactive mixture comprises at least 40% by weight of (meth)acrylates having at least two double bonds and at least one thermal initiator, and the moulding material comprises at least one polymer which is selected from the group consisting of polymethyl methacrylate, polymethylmethacrylimide, polymethyl methacrylate copolymer, polystyrene copolymer and polycarbonate,
**characterized in that**
the reactive mixture comprises at least one photoinitiator and, after thermal curing, is cured by irradiation.

2. Process according to Claim 1, wherein the polystyrene copolymer comprises styrene-acrylonitrile copolymer or styrene-maleic acid copolymer.

3. Process according to Claim 1, wherein the moulding material comprises at least 50% by weight of polymethyl methacrylate, polymethyl methacrylimide and/or polymethyl methacrylate copolymers.

4. Process according to at least one of Claims 1 to 3, wherein the reactive mixture comprises at least one (meth)acrylate having three or more double bonds, wherein the proportion of (meth)acrylates having three or more double bonds is at least 25% by weight, based on the weight of the reactive mixture.

5. Process according to at least one of Claims 1 to 4, wherein the reactive mixture comprises not more than 75% by weight of monomers having two or less double bonds.

6. Process according to at least one of Claims 1 to 5, wherein the reactive mixture has a dynamic viscosity in the range of 1 to 200 mPa·s at 25°C.

7. Process according to at least one of Claims 1 to 6, wherein the reactive mixture comprises 0.01% by weight to 3% by weight of photoinitiator and 0.03% by weight to 5% by weight of thermal initiator, based on the weight of the reactive mixture.

8. Process according to at least one of Claims 1 to 7, wherein the reactive mixture comprises 1,6-hexanediol diacrylate, trimethylolpropane triacrylate and/or pentaerythrityl tetraacrylate.

9. Process according to at least one of Claims 1 to 8, wherein the reactive mixture comprises colorants, metallic pigments, UV stabilizers, fillers, at least one lubricant and/or nanomaterials.

10. Process according to at least one of Claims 1 to 9, wherein the thickness of the coating is in the range of 5 µm to 75 µm.

11. Process according to at least one of Claims 1 to 10, wherein the moulding material is injected into the injection mould at a temperature in the range of 220 to 330°C and is subsequently cooled to a temperature in the range of 70 to 150°C before the reactive mixture is injected into the space.

12. Process according to at least one of Claims 1 to 11, wherein the reactive mixture is thermally cured at a temperature in the range of 80 to 130°C in the injection mould and subsequently the thermally cured reactive mixture is cured by irradiation at a temperature in the range of 10 to 40°C.

13. Coated moulding obtainable by a process according to at least one of Claims 1 to 12 and comprising a moulding which is obtainable by injection moulding processes and a coating which is obtainable by polymerization of (meth)acrylates having at least two double bonds, wherein the coating has an adhesive strength rating of not more than 1 according to the cross hatch test and a decrease in gloss at 20°C after a scratch resistance test according to ASTM 1044 (12/05) (applied weight 500 g, number of cycles = 100) of not more than 10%.

14. Moulding according to Claim 13, wherein the coating has a thickness in the range of 5 µm to 75 µm.

15. Moulding according to at least one of Claims 13 to 14, wherein the decrease in the gloss of the moulding at 20°C after a scratch resistance test according to ASTM 1044 (12/05) is not more than 6%.

## Revendications

1. Procédé pour la production de corps moulés revêtus, dans lequel on injecte dans un moule à injection une matière à mouler et on la refroidit avec obtention d'un corps moulé, on modifie le moule à injection de manière qu'il se forme un espace intermédiaire entre la surface à revêtir du corps moulé et la surface interne su moule à injection, on remplit par injection l'espace intermédiaire résultant avec un mélange réactif et on fait d'abord durcir thermiquement le mélange réactif ; et
le mélange réactif comprenant au moins 40 % en poids de (méth)acrylates comportant au moins deux doubles liaisons et au moins un amorceur thermique, et
la matière à mouler comprenant au moins un polymère qui est choisi dans le groupe constitué par le poly-(méthacrylate de méthyle), le polyméthacrylméthylimide, un copolymère de poly(méthacrylate de méthyle), un copolymère de polystyrène et un polycarbonate **caractérisé en ce que**
le mélange réactif comprend au moins un photoamorceur et après le durcissement thermique durcit par irradiation.

2. Procédé selon la revendication 1, dans lequel le copolymère de polystyrène comprend un copolymère styrène-acrylonitrile ou un copolymère styrène-acide maléique.

3. Procédé selon la revendication 1, dans lequel la matière à mouler comprend au moins 50 % en poids de poly(méthacrylate de méthyle), polyméthacrylméthylimide et/ou copolymères de poly(méthacrylate de méthyle).

4. Procédé selon au moins l'une quelconque des revendications 1 à 3, dans lequel le mélange réactif comprend au moins un (méth)acrylate comportant trois ou plus de trois doubles liaisons et dont la proportion de (méth)acrylate ayant trois ou plus de trois doubles liaisons représente au moins 25 % en poids, par rapport au poids du mélange réactif.

5. Procédé selon au moins l'une quelconque des revendications 1 à 4, dans lequel le mélange réactif comprend au maximum 75 % en poids de monomères comportant deux ou moins de deux doubles liaisons.

6. Procédé selon au moins l'une quelconque des revendications 1 à 5, dans lequel le mélange réactif présente une viscosité dynamique dans la plage de 1 à 200 mPa*s à 25 °C.

7. Procédé selon au moins l'une quelconque des revendications 1 à 6, dans lequel le mélange réactif comprend 0,01 % en poids à 3 % en poids de photoamorceur et 0,03 % en poids à 5 % en poids d'amorceur thermique, par rapport au poids du mélange réactif.

8. Procédé selon au moins l'une quelconque des revendications 1 à 7, dans lequel le mélange réactif comprend du diacrylate de 1,6-hexanediol, du triacrylate de triméthylolpropane et/ou du tétraacrylate de pentaérythritol.

9. Procédé selon au moins l'une quelconque des revendications 1 à 8, dans lequel le mélange réactif comprend des agents colorants, des pigments métalliques, des stabilisants UV, des charges, au moins un lubrifiant et/ou des nanomatériaux.

10. Procédé selon au moins l'une quelconque des revendications 1 à 9, dans lequel l'épaisseur du revêtement se situe dans la plage de 5 µm à 75 µm.

11. Procédé selon au moins l'une quelconque des revendications 1 à 10, dans lequel on injecte dans le moule à injection la matière à mouler à une température dans la plage de 220 à 330 °C et ensuite on le refroidit jusqu'à une température dans la plage de 70 à 150 °C avant d'injecter le mélange réactif dans l'espace intermédiaire.

12. Procédé selon au moins l'une quelconque des revendications 1 à 11, dans lequel le mélange réactif est durci thermiquement dans le moule à injection à une température dans la plage de 80 à 130 °C et ensuite le mélange réactif durci thermiquement est durci par irradiation à une température dans la plage de 10 à 40 °C.

13. Corps moulé revêtu, qui peut être obtenu conformément à un procédé selon au moins l'une quelconque des revendications 1 à 12, comprenant un corps moulé pouvant être obtenu par un procédé de moulage par injection et un revêtement qui peut être obtenu par polymérisation de (méth)acrylates comportant au moins deux doubles liaisons, le revêtement présentant une évaluation de l'adhésivité d'au maximum 1 selon le test de quadrillage et une réduction du brillant sous 20° conformément à un test de résistance à la rayure selon ASTM 1044 (12/05) (charge appliquée 500 g, nombre des cycles = 100) d'au maximum 10 %.

14. Corps moulé selon la revendication 13, dans lequel le revêtement présente une épaisseur dans la plage de 5 µm à 75 µm.

15. Corps moulé selon au moins l'une quelconque des revendications 13 et 14, dans lequel la réduction du brillant sous 20° du corps moulé conformément à un test de résistance à la rayure selon ASTM 1044 (12/05) est d'au maximum 6 %.
